# EUROPEAN PATENT APPLICATION

(11) **EP 3 488 900 A1**
(43) Date of publication of application: **29.05.2019**
(21) Application number: 17203168.4
(22) Date of filing: 22.11.2017
(51) Int. Cl.: A62B 7/14, A62B 18/08

(54) **ON-DEMAND OXYGEN DISPENSING SYSTEM FOR AIRCRAFT PASSENGERS**

(71) Applicant: Zodiac Aerotechnics, 78373 Plaisir Cedex (FR)
(72) Inventor: RITTNER, Wolfgang, 23623 Ahrensboek (DE); DAMLO, Craig, Seattle, WA 98206 (US); MAROTTE, Henri, 91760 Itteville (FR)
(74) Representative: Cabinet Plasseraud

(57) **Abstract**

An oxygen dispensing system for passenger(s) of an aircraft, comprising an oxygen dispensing unit (1), with a dispensing valve (6) supplied by an oxygen source, a tube assembly (10) comprising a tube (3) and an optical fiber (5), a breathing mask (2), wherein the tube establishes a fluid connection between the oxygen dispensing unit and the mask, a sensory device (7) arranged at the breathing mask, connected to the oxygen dispensing unit via the optical fiber, wherein the sensory device senses, at the breathing mask, variations of parameter(s) influenced by the breathing of a passenger using the mask, and transmit, via the optical fiber (5), corresponding breath signal(s) to the oxygen dispensing unit (1) which is configured to deliver, upon said breath signal, a controlled quantity of oxygen in the tube.

## Description

### FIELD OF THE INVENTION

The present invention relates to oxygen dispensing systems for aircraft passengers.

More particularly, it concerns on-demand oxygen dispensing systems, in which masks are caused to fall from the overhead modules (PSU Passenger Service Unit) whenever a depressurization occurs, and oxygen is dispensed to passengers in a 'on-demand' mode, i.e. only if/when a passenger breathes in the mask.

### BACKGROUND OF THE DISCLOSURE

It is known to supply oxygen to passengers in an emergency situation like a decompression situation, smoke or fire in the cabin. For this purpose, oxygen masks drop out of a passenger service unit and oxygen is supplied to the passenger via said oxygen mask. The oxygen mask is connected to the passenger service unit via a connecting line.

Usually, the passenger can activate the oxygen supply by pulling the connecting line wherein said connecting line may be a flexible tube which at the same time serves to direct the oxygen from the passenger service unit to the oxygen mask or maybe a wire or rope or the like distinct from the connecting line.

Oxygen may be stored in the passenger service unit in a chemically bound form from which is produced said oxygen in a chemical reaction after activation; this type of oxygen source is called chemical oxygen generator (COG). Alternately, oxygen may be stored in a pressurized tank (local or remote) and made available to user devices through a one or more supply lines. Alternately, oxygen may be produced from a compressor bleed air flow passing through an oxygen concentrator (this system is known as On-Board Oxygen Generation System, OBOGS in short).

The passenger oxygen masks are normally located in service units which, for each seating group, are usually located below the baggage compartments located in the upper cabin region. Upon a decompression event or the like, masks are caused to drop automatically from the service units. Once the concerned passenger pulls the mask, this activates the oxygen supply for the concerned mask.

However it is preferable that if no passenger is present (no one uses the dropped mask, even after pulling it) the oxygen should not be dispersed uselessly, even if the mask has been pulled. The quantity of available oxygen is limited and therefore the oxygen shall not be wasted. It is noted that crew members might use briefly one available mask while this crew member moves along the aisle.

Therefore, it is known to provide, in the service unit, devices known as "oxygen dispensing unit" whose purpose is to deliver oxygen "on demand" for passengers.

Some have proposed to add a sensor at the mask with an additional wiring to connect such sensor to an overhead control unit; this has not been successful since the risk of jamming/tangling tubes and wirings is not acceptable, especially under emergency conditions. Further, the use of a wiring to connect the mask entails additional weight and ageing of such wiring is not good enough.

Another proposal is to detect a person breathing in the mask by monitoring the pressure variations sensed at the oxygen dispensing unit. There is provided one sensor per one flexible tube to which a mask is attached.

One problem arises when a child or an infant uses the breathing mask: under this condition, pressure variations sensed at the oxygen dispensing unit may be too small to be sensed properly, and therefore it exists a risk of non-detection of the breathe of a child or an infant which uses the breathing mask. The risk of non-detection may also exist for elderly people or people suffering from severe respiratory disorders like asthma.

Therefore, there remains a need to provide enhanced solutions which reliably detects the presence or not of an individual, whatever its age, at the breathing mask, and this without adding a wiring the mask connection.

### SUMMARY OF THE DISCLOSURE

According to one aspect of the present invention, there is disclosed an oxygen dispensing system for one or more passenger(s) of an aircraft, comprising :
- an oxygen dispensing unit (1), with a dispensing valve (6) supplied by an oxygen source,
- a tube assembly (10) comprising a tube (3) and one or more optical fiber (5),
- a breathing mask (2), wherein the tube establishes a fluid connection between the oxygen dispensing unit and the mask,
- a sensory device (7) arranged at the breathing mask, connected to the oxygen dispensing unit via the one or more optical fiber (5),
wherein the sensory device (7) is configured to sense, at the breathing mask, variations of one or more parameter influenced by the breathing of a passenger using the mask, and transmit, via the one or more optical fiber (5), one or more corresponding breath signal to the oxygen dispensing unit (1) which is configured to deliver, upon said breath signal, a controlled quantity of oxygen in the tube.

The oxygen dispense can be done either by bolus, or by a continuous controlled quantitized flow.

Thanks to these dispositions, there is no wiring for connecting the mask to the PSU, and the risk of tangling/jamming between tube and wiring is avoided. Nonetheless, the detection is performed at the proximity of the face of the individual which uses the breathing mask and therefore the reliability of the detection is improved. When a child or an infant uses the breathing mask, his/her presence is reliably detected. Conversely, when nobody is using the mask any longer, no more detectable signal is sensed, and after a certain time out, oxygen dispense is suspended thereby avoiding oxygen waste.

Use of plastic fiber optics does not increase the weight much, its lifetime is virtually unlimited.

The term "controlled quantity" means here either a continuous flow, or a flow by "bolus" (i.e. breath pulse system).

The term "bolus" is defined by a volume of oxygen comprised between 10cm3 and 250cm3 (volume taken at Normal Temperature (21,1°C), Pressure (101,3 kPa), Dry (pH₂O=0 kPa) (in short 'NTPD' conditions). In other words a "bolus" can be defined as an average volume of one normal breathing cycle of an average individual.

The term *"controlled flow"* means a flow controlled by a modulation valve by a signal like a PWM signal.

The term *"breath signal"* can designate a raw signal or a pre-treated signal (after passing a signal conditioning circuit).

In various embodiments of the invention, one may possibly have recourse in addition to one and/or other of the following arrangements, taken alone or in combination.

According to one option, the sensory device comprises a temperature sensitive element (71), and the one or more parameter influenced by the breathing comprises a temperature prevailing in a cavity (9) delimited by the mask and the user's face. Whereby a significant temperature change of typical 10 °C between exhalation and inhalation can be sensed.

According to one option, the temperature sensitive element is a thermistor arranged at the internal side (21) of the mask body. Whereby the thermistor lies in the exhalation flow and the temperature variation can be sensed fast enough.

According to one option, the oxygen dispensing unit is an oxygen pulse regulator and the oxygen pulse regulator (1) is configured to trigger a delivery of a predetermined oxygen bolus/pulse in the tube, each bolus being defined by a volume of oxygen comprised between 20cm3 and 500cm3 (volume taken at a temperature comprised between 15°C and 30°C under a pressure between 0,1 and 1 atmosphere). Whereby using of such a bolus logic minimizes overall losses of oxygen and it allows to save oxygen.

According to one option, the sensory device (7) is electrically operated and receives electrical power from light provided in the optical fiber. Whereby it allows analog sensing of one or more parameter influenced by the breathing (not just a binary info or on/off level). Furthermore, even though the device is electrically operated, there is no electrical wire is required, there is no battery that needs end-of-life servicing.

According to one option, the tube assembly is such that the one or more optical fiber (5,51,52) is co-molded into the tube. More precisely the optical fiber can be co-molded into the tube wall. This provides a very robust solution, with few or no risk of damaging the optical fiber (at any time of the cycle life of the aircraft.

According to one option, the sensory device comprises:
a local energy storage (74), a solid-state sensor (71), a processing unit (72), an optical coupler (76) to send back pressure signal. Thanks to this configuration, no electrical wire is needed to connect the mask to the PSU.

According to one option, the optical fiber (5) is arranged inside the tube, against the inner wall of the tube. The optical fiber may follow a helical path with a long pitch. Whereby optical fiber is protected inside the tube against mechanical damage; due to the larger length of the optical fiber, when the user pulls on the mask the tube extends a bit but this does not stress the optical fiber.

According to one option, there is provided two optical fibers (51,52) in the tube assembly. One fiber is for energy supply, the other one is for sending returning information, this also simplifies optic designs at both ends.

According to one option, there is provided a hybrid connector (4) which comprises a tube connector (41) and an optical fiber connector (42). Thereby assembly is simple and made reliable.

According to one option, the optical fiber is made of plastic. Thereby, the technical solution is inexpensive.

According to one option, the optical fiber is surrounded by a protection sheath. Thereby, there is provided a mechanical protection to protect the optical fiber.

According to one option, the one or more parameter influenced by the breathing comprises a local pressure, and the sensory device (7) comprises a pressure sensitive element (75). Thereby, the breathing of the user can be detected reliably, the variation of pressure being reflected of the breathing of the user. Furthermore, the pressure sensitive element is an available component, even as an 'on-chip' solution.

According to one option, the sensory device (7) comprises a movable membrane and a mirror (79) configured to be movable between an inhalation position and a exhalation position, wherein in one of the position, light arriving in the optical fiber is substantially reflected back in the optical fiber with a light reflection above a first threshold (TH1), and in the other position, light reflection back in the optical fiber is below a second threshold (TH2).

There is no electronic at all in the mask, just optical components. This solution is advantageously an electric-free solution.

The present disclosure is also directed at a method to dispense oxygen dispensing system for one or more passenger(s) of an aircraft, the system comprising
- an oxygen dispensing unit (1), with a dispensing valve (6) supplied by an oxygen source,
- a tube assembly (10) comprising a tube (3) and one or more optical fiber (5),
- a breathing mask (2), wherein the tube establishes a fluid connection between the oxygen dispensing unit and the mask,
- a sensory device (7) arranged at the breathing mask, connected to the oxygen dispensing unit via the one or more optical fiber (5),

The method comprising :
a- sensing, at the breathing mask, variations of one or more parameter influenced by the breathing of a passenger using the mask,
b- transmit, via the one or more optical fiber (5), one or more breath signal corresponding to the one or more parameter, to the oxygen dispensing unit (1),
c- controlling, upon said breath signal, at the oxygen dispensing unit (1), the dispensing valve (6) to deliver, a controlled quantity of oxygen in the tube.

The oxygen dispense can be done either by bolus, or by a continuous controlled quantitized flow.

### BRIEF DESCRIPTION OF THE DRAWINGS

Other features and advantages of the invention appear from the following detailed description of one of its embodiments, given by way of non-limiting examples, and with reference to the accompanying drawings, in which:
- Figure 1 shows a diagrammatic view of an on-demand oxygen dispensing system for aircraft passengers according to the present disclosure,
- Figure 2 shows a diagrammatic sectional view of a first embodiment of the mask,
- Figure 3 shows a diagrammatic view illustrating more in details the sensory device with its electrical circuit,
- Figures 4A and 4B show a hybrid connector that can be used in the context of the present disclosure, respectively in-line connector and socket-based connector,
- Figure 5 shows a cross sectional view of a flexible oxygen tube having an embedded optical fiber,
- Figure 6 shows a cross sectional view of a flexible oxygen tube having two embedded optical fibers,
- Figure 7 illustrates a time-chart exhibiting various signals relating to user's breathe,
- Figure 8 shows a diagrammatic sectional view of a second embodiment of the mask,
- Figure 9 shows a diagrammatic sectional view of a third embodiment of the mask, .
- Figure 10 shows a diagrammatic perspective view of a variant regarding the tube assembly,
- Figure 11 shows a functional diagram relating to signals transiting through the optical fiber,
- Figure 12 shows a variant embodiment.

### DETAILLED DESCRIPTION OF THE DISCLOSURE

In the figures, the same references denote identical or similar elements. It should be noted that, for clarity purposes, some element(s) may not be represented at scale.

In commercial aircraft, there are provided above the passengers seats what is known in the art as Passenger Service Unit (PSU).

PSU generally comprises one reading light per passenger seat; PSU generally comprise one air vent per passenger seat. PSU may also comprise indicator(s) like safety belt buckling injunction, and a button to call crew member.

PSU **14** also comprises equipment to supply oxygen to the passengers in case of emergency condition. Equipment to supply oxygen for passengers is normally hidden behind a flap. This flap is caused to open by a crew controlled signal in case of emergency condition, thereby releasing the masks which thus drop toward the heads of the passengers.

There is generally one PSU per module of seats ('group' of seats), a module of seats being defined as a group of adjacent seats in a given row. Often modules comprise 2, 3 or 4 seats. PSU comprises at least one oxygen mask per one seat. On some aircrafts, there may be provided one extra mask per module, which give certain redundancy for passengers and/or crew members (i.e. N+1 masks for N seats).

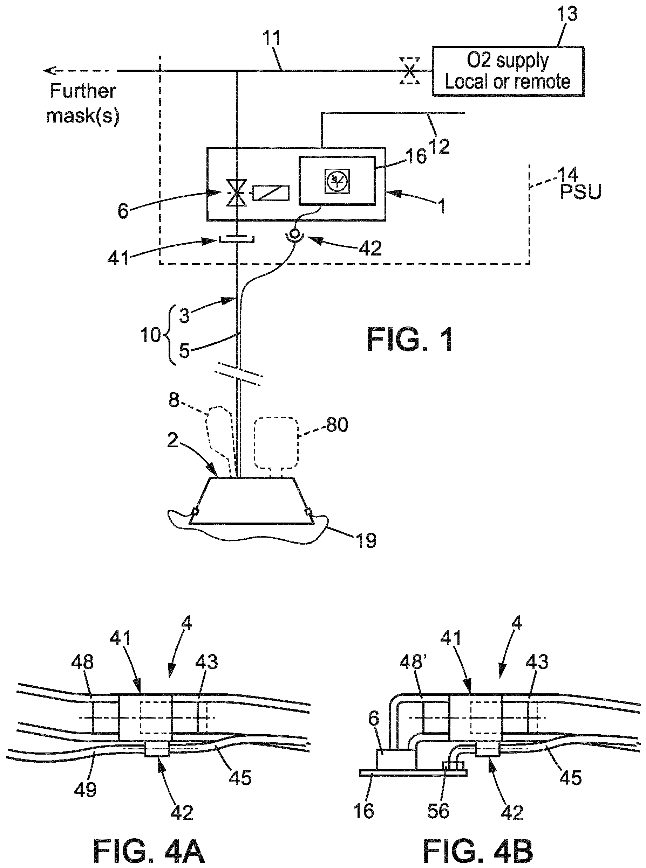

As illustrated on Figure 1, which is common to all embodiments of the present disclosure, **PSU 14** comprises an oxygen dispensing system **1.** Oxygen dispensing system comprises a control unit **16.** Oxygen dispensing system comprises a dispensing valve **6** controlled by the control unit **16.**

The dispensing valve **6** is coupled to an oxygen supply **13** via an oxygen supply line **11.** Oxygen supply **13** may be housed in the PSU, in which case a chemical oxygen generator (COG) is used. Oxygen supply **13** may be located remotely, and may be common to two or more PSU (two or more modules of seats). Oxygen supply **13** may be located remotely as a central equipment.

Pure oxygen or nearly pure oxygen is delivered from the oxygen supply line **11.**

Supply of oxygen to the dispensing valve **6** may depend on prior activation of the oxygen source. As known per se, in the case of chemical oxygen generators, activation is triggered by releasing a trigger pin. There may be provided one triggering per mask or one triggering per PSU.

For each passenger, a breathing mask **2** is provided. The mask generally exhibits a cup shape and a yellow color.

The mask **2** comprises a rigid base body **20** and a flexible bowl **27.**

The wall of the mask has an internal side **21** and external side **22.**

The mask **2** may comprise an economizer bag **8** (also called 'reservoir' bag) and a rebreathing bag **80,** as known per se and thus not described in details here.

In use, the mask **2** covers the mouth and the nose of a passenger. The mask **2** may be fixed at the head of the passenger with the help of an elastic strap **19.** This elastic strap **19** may ensure a sufficient contact pressure of a sealing lip of the mask **2** to the face of the passenger as known per se.

For each breathing mask **2,** there is provided a tube assembly **10** comprising a tube **3** and an optical fiber **5.** The tube assembly **10** establishes a connection between the oxygen dispensing unit **1** and the mask **2.**

The tube establishes a fluid connection between the oxygen dispensing unit and the mask, whereas the optical fiber **5** establishes a light signal connection between the oxygen dispensing unit and the mask.

Instead of one optical fiber **5,** there may be provided two optical fiber 5 or more, therefore the generic wording of "*one or more optical fiber"* 5 is used.

The optical fiber is plastic optical fiber (POF in short). The diameter of the fiber is typically in the range from 10 microns to 1 mm. It is not excluded to select a fiber with a larger diameter, for example from 1 mm to 2 mm.

The mask **2** comprises a sensory device **7** connected to the oxygen dispensing unit 1 via the one or more optical fiber **5.**

Generally speaking, the sensory device **7** is configured to sense a parameter **91** influenced by the breathing of a passenger using the mask. In particular, a parameter influenced by the difference between inhalation and exhalation can be chosen. Information like alternate directions of breathing air flow and temperature of exhaled air flow reflect the breathe of individuals.

The sensory device **7** is configured to issue a breath signal reflecting the breathing of the user, and configured to send back a corresponding breath signal **92** to the oxygen dispensing unit 1. The breath signal **92** is representative of the user breath cycle.

The term *"breath signal*" can designate a raw signal or a pre-treated signal (after passing a signal conditioning circuit).

From this breath signal **92,** the oxygen dispensing unit **1** is configured to deliver, upon said breath signal, a controlled quantity of oxygen in the tube.

The term *"controlled quantity*" means here either a continuous flow, or a flow by *"bolus".*

The term "*bolus* is defined by a volume of oxygen comprised between 10cm3 and 250cm3 (volume taken at Normal Temperature (21,1°C), Pressure (101,3 kPa), Dry (pH₂O=0 kPa) (in short '*NTPD*' conditions). It is to be noted that "bolus" system is also sometimes called "pulse-dose system".

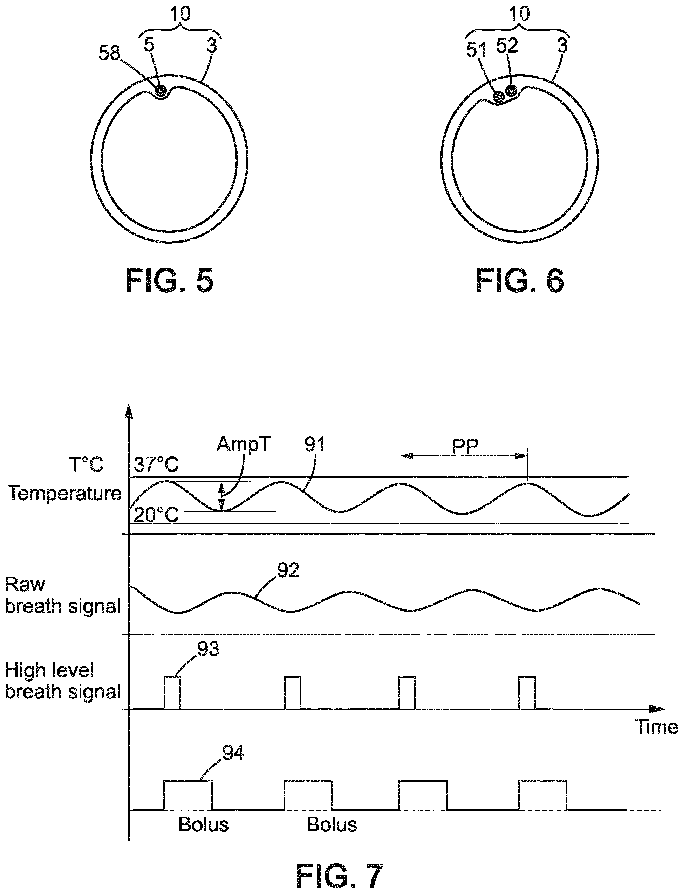

In such a bolus system, after a quantitized volume of oxygen is delivered, there is an interruption of delivery during at least 200 ms, before another quantitized volume of oxygen is delivered, and so on with a cycle intended to coincide with the respiratory cycle of the user, as illustrated at Figure 7. We note that, in a particular implementation of a bolus system, the quantitized volume of oxygen is to be construed as a maximum volume since the downstream entity may not be able to admit said quantitized volume.

The term *"controlled flow"* means a flow controlled by a modulation valve by a signal like a PWM signal. The controlled flow is determined in function of current aircraft altitude.

The controlled flow is also determined according to the presence or not of a reservoir bag.

The controlled flow may also be determined individually for each passenger according to various parameters, such as pseudo-period **PP** of breath signal, amplitude of breath signal, variability of pseudo-period **PP** of the breath signal.

When nobody is using the mask any longer, no more detectable signal is sensed, and after a certain time out, oxygen dispense is suspended, thereby avoiding oxygen waste. Conversely, when a child or an infant uses the breathing mask, his/her presence is reliably detected by the temperature cycle, even if the exhalation pressure/flow is low.

The material of the tube can be : polyethylene, polypropylene, PVC or polyurethan.

Extensibility ratio and elastic module should be chosen such that the tube may support the pulling action for triggering oxygen supply. It must not break upon pulling, it must not extend too much to preserve integrity of optical fiber.

The following data at 21,1°C (NTPD), the length of the tube is comprised between 0 mm and 2200 mm; according to one example, the length of the tube is comprised between 900 mm and 1500 mm.

The internal diameter of the tube is comprised between 0 and 30 mm; according to one example, the internal diameter of the tube is comprised between 2 mm and 10 mm.

The thickness of the wall of the tube is comprised, between 0 mm and 3 mm. according to one example the thickness of the wall is comprised between 0,5 mm and 1,5 mm.

### Generic operation

The sensory device 7 is configured to sense, at the breathing mask 2, variations of one or more parameter influenced by the breathing of a passenger using the mask, and transmit, via the one or more optical fiber 5, one or more corresponding breath signal to the oxygen dispensing unit 1 which is configured to deliver, upon said breath signal, a controlled quantity of oxygen in the tube either by bolus, either in continuous flow.

The oxygen dispensing unit 1 receives high level breath signal **93,** and in the case of a bolus logic, the control unit controls accordingly the dispensing valve **6.** As shown at figure 7, the dispensing valve is open during the calculated time (timing chart noted **94).** Such calculated open time depends on the aircraft altitude, and possibly on auxiliary parameters, like pressure in the oxygen supply, etc...

One bolus of oxygen is delivered par one respiratory cycle. After a bolus delivery, during the remaining time of the respiratory cycle, the delivery of oxygen is OFF, this Off time lasts for a time comprised between 200 ms and 3 seconds. The duration of bolus oxygen delivery is typically comprised between 500 ms and 2 seconds. Respiratory rate can increase much in case of user stress, high average CO2 concentration or low average oxygen concentration, respiratory cycle time can decrease from 5-6 seconds down to 2 or even 1 second or below.

The bolus volume is the result of a calculation which depends on the aircraft altitude, and possibly on auxiliary parameters, like pressure in the oxygen supply, etc, which dictates the needed quantity of oxygen per user inhalation.

According to another logic (not shown at Figure 7), the dispensing valve can be controlled by a PWM signal and provide a quantitized controlled flow of oxygen, continuous at the time scale of the respiratory cycle. The PWM signal is the result of a calculation which depends on the aircraft altitude, and possibly on auxiliary parameters, like pressure in the oxygen supply, etc, which dictates the needed flow of oxygen.

The control frequency of the PWM is much greater than the respiratory cycle frequency; in practice the control frequency of the PWM is comprised between 5Hz and 500Hz; In the case of medium or high frequency control, the control valve can be selected as a a proportional valve and not a binary On/Off valve.

### First embodiment

Here, the sensory device **7** relies on temperature sensing.

The one or more parameter influenced by the breathing is the temperature prevailing in a cavity **9** delimited by the mask and the user's face **UF**.

There is provided a temperature sensitive element, such as a thermistor.

The thermistor can be a NTC, or a PTC. Preferably a NTC with a good sensitivity in the range 10°C-40°C is chosen, like Epcos™ S861 series or Honeywell™ 135 Series.

The thermistor **71** is located at the internal side of the mask body, such that it receives directly the exhalation flow from user mouth/nose.

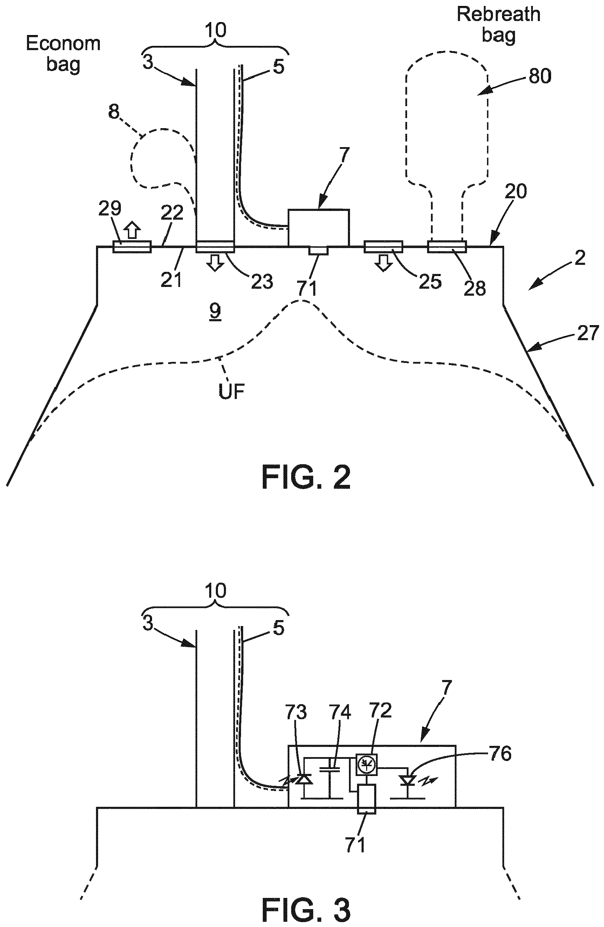

As illustrated on Figure 2, the thermistor **71** can be a discrete component in a projected location such the flow of exhaled air practically surrounds the thermistor **71.** The time constant is therefore minimized (i.e. no substantial delay) and the temperature cycling is sensed nearly in real time.

Exhalation temperature is comprised between 30°C and 37°C, whereas ambient temperature is around 20°C.

A criterion to detect a human presence breathing with the mask may be a temperature variation **(AmpT** at Fig 7) of at least 5°C over less than 10 seconds. A criterion to detect a human presence breathing with the mask may be a temperature variation of at least 8°C over less than 10 seconds. Temperature prevailing at the thermistor is denoted by **91** at Figure 7. An oscillation **AmpT** of at least 5°C or at least 8°C denotes a human breathing. Pseudo period **PP** of the breath signal is comprised between 3s and 10s.

The sensory device **7** is electrically operated and receives electrical power from light provided in the optical fiber. A LED **18** is comprised in the oxygen dispensing unit **1,** the LED is and energized (i.e. supplied by a current driven by a transistor) in the oxygen dispensing unit **1.** The light is guided in the optical fiber 5 to the sensory device in a first direction **S1** ('down'). The incoming light arrives at a photodiode **73** in the sensory device 7.

The breath signal **92** is sent in the opposite direction **S2** from the sensory device 7 to the oxygen dispensing unit **1.**

The sensory device comprises an electronic circuit with the above-mentioned photodiode **73** converting the incident light ("Supply") into electrical current, a reservoir capacitor **74,** a 3V microcontroller **72,** an output diode **76.**

Instead of the microcontroller, an ASIC circuit can be used.

Anyway a low consumption computing unit is preferred.

The breath signal **92** can be a raw signal or a pre-treated signal **93.** There may be provided a conditioning stage to convert the raw signal into pretreated signal **93.**

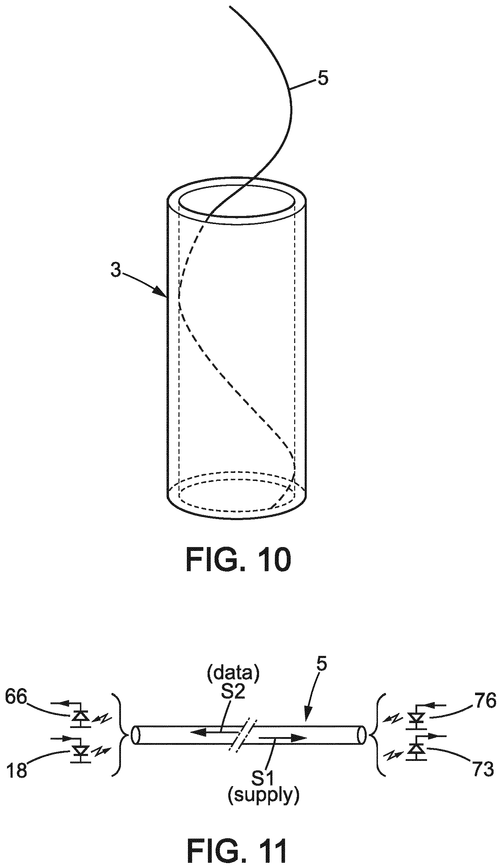

As shown at Figure 11, data return flow from the mask 2 to the oxygen dispensing unit **1** is made by the following channel using the optical fiber. The output diode **76** emits light into the optical fiber, the light is received at the other end at a photodiode **66** within the oxygen dispensing unit 1 and corresponding signal is transmitted to the control unit **16.**

Regarding the mask body, with reference to figure 2, there is provided an intake valve **23,** an exhaust valve **29,** and optionally a dilution valve **25** (which allows cabin air to be drawn in the cavity **9** delimited by the mask) and optionally a rebreathe valve **28.**

Instead of being aligned as schematically depicted in figure 2, these valves are preferably arranged around the center in a circumferential fashion.

### Tube assembly and connection

As illustrated on Figure 5, the optical fiber **5** is co extruded within the wall of the plastic tube **3.** Advantageously, there may be provided a sheath **58** around the optical fiber. The sheath **58** provides mechanical protection for the optical fiber.

As illustrated on Figure 6, two optical fibers are co extruded within the wall of the plastic tube. Configurations with more than two optical fibers **51,52** are also possible.

As illustrated on Figure 10, there is illustrated another solution to include the optical fiber 5 into the tube 3. The optical fiber follows a helical path with a long pitch. For example, there may be provided one turn per a length comprised between 5 cm and 20 cm.

The optical fiber is protected inside the tube against mechanical damage; due to the larger length of the optical fiber, when the user pulls on the mask the tube extends a bit but this does not stress the optical fiber.

Fig 4A illustrates an in-line hybrid connector **4,** which comprised pneumatic connector **41** and an optical connector **42.**

In the pneumatic connector, there is provided a first tube portion **43** which is connected to a female mating part and a second tube portion **48** which is connected to a male mating part.

In the optical connector, there is provided a first fiber portion **45** which is connected to a female mating part and a second fiber portion **49** which is connected to a male mating part.

Fig 4B is similar to figure 4A, however the left part of the connection is formed as sockets on the electrical control unit **16.** In this case, the tube assembly 10 is connected directly to the control unit **16.** A fluid socket connector **48'** connects the fluid connection to the dispensing valve **6.** A fiber socket connector **56** connects the fiber to the opto-couplers **66, 18.**

### Other embodiments and variants

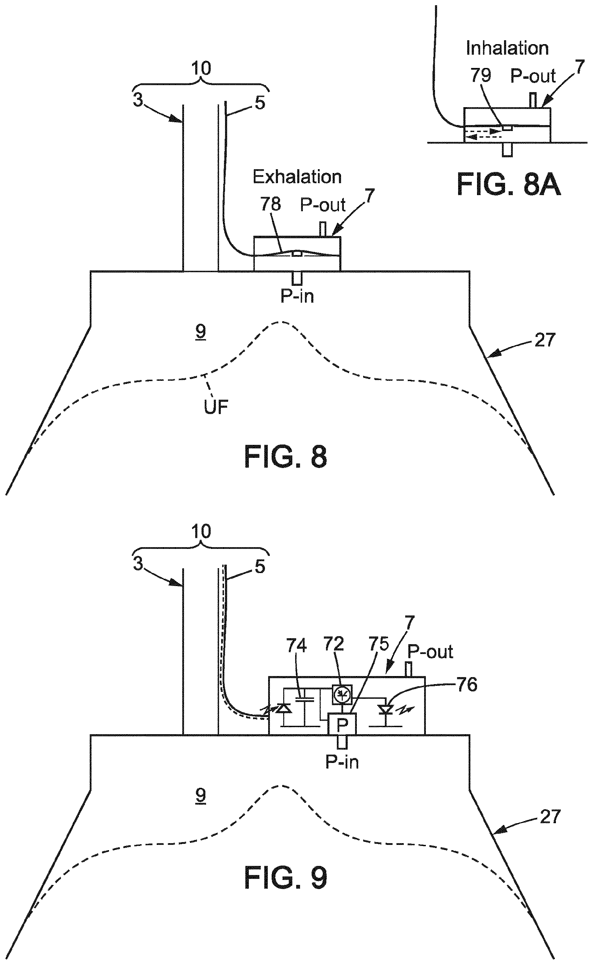

Figure 8 and 8A illustrate a second embodiment wherein no electronic component is used at the sensory device 7. Instead a flexible membrane **78** is used which is movable at least between two positions. A first position corresponds to an inspiration phase of the user. A second position corresponds to an exhalation phase of the user.

A mirror or a reflective surface **79** is provided. Reflection is provided in one of the first and second positions, whereas it is not provided in the other.

The mirror or a reflective surface **79** is configured to be movable between an inhalation position and a exhalation position. In one of the position, light arriving in the optical fiber is substantially reflected back in the optical fiber with a light reflection above a first threshold TH1. In the other position, light reflection back in the optical fiber is below a second threshold TH2. This solution proves to be very robust against some parasitic light rays or light leaks.

Figure 9 illustrates a third embodiment wherein a pressure sensor **75** is used the third embodiment these seeming out of the first embodiment regarding general electronic configuration. However as a temperature sensor is replaced here by a pressure sensor **75,** otherwise called pressure sensitive element, the rest of the components being identical or similar to what was described for the first embodiment. The pressure sensitive element can be taken from commercially available silicon based sensing device. One can choose pressure sensor from e.g. Panasonic™ PS and PF product lines, Bosch™ BMP280 or others.

It is not excluded to use cumulatively a temperature sensor and a pressure sensor.

It will be appreciated that overall weight is reduced since onboard oxygen quantity can be limited to the strict necessary and excessive payload is avoided. Just to give order of magnitude, Weight of circuit 16 is less than 10grams, Weight of fiber is less than 10 grams.

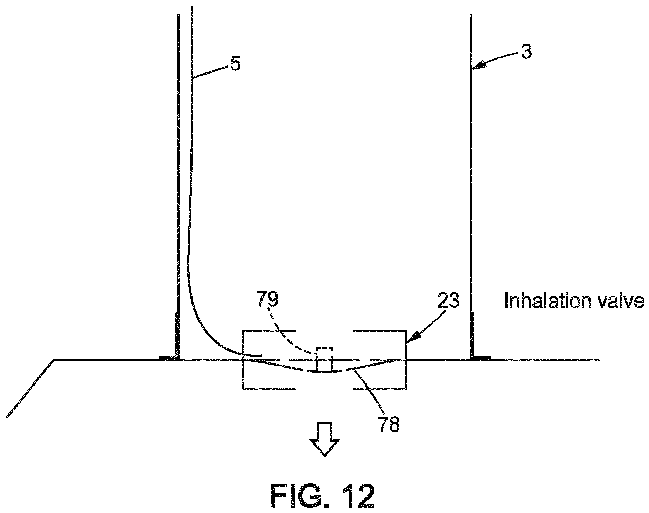

Figure 12 illustrates a variant of the second embodiment, in which the mask oxygen inhalation valve **23** houses a membrane which serves as a check valve and at the same time as an optical indicative membrane **78.** The mask inhalation valve **23** has an inhalation valve membrane which opens each time the user inhales and closes each time the user exhales.

An integrated mirror is configured to detect unsteady reflections of the light signal; it can be attached to into the oxygen inhalation valve membrane, or it can even be integrated into the oxygen inhalation valve membrane. The membrane might be treated with a reflecting surface coating, e.g. silver, chrome

Second embodiment and its variant provide non-electric breathing detection solution in the mask with the integrated mirror.

## Claims

1. An oxygen dispensing system for one or more passenger(s) of an aircraft, comprising :
- an oxygen dispensing unit (1), with a dispensing valve (6) supplied by an oxygen source,
- a tube assembly (10) comprising a tube (3) and one or more optical fiber (5),
- a breathing mask (2), wherein the tube establishes a fluid connection between the oxygen dispensing unit and the mask,
- a sensory device (7) arranged at the breathing mask, connected to the oxygen dispensing unit via the one or more optical fiber (5),
wherein the sensory device (7) is configured to sense, at the breathing mask, variations of one or more parameter influenced by the breathing of a passenger using the mask, and transmit, via the one or more optical fiber (5), one or more corresponding breath signal to the oxygen dispensing unit (1) which is configured to deliver, upon said breath signal, a controlled quantity of oxygen in the tube.

2. The system according to claim 1, wherein the sensory device (7) comprises a temperature sensitive element (71), and the one or more parameter influenced by the breathing comprises a temperature prevailing in a cavity (9) delimited by the mask and the user's face.

3. The system according to claim 2, the temperature sensitive element is a thermistor (71) arranged at the internal side (21) of the mask body.

4. The system according to any of the claims 1 to 3, wherein the oxygen dispensing unit is an oxygen pulse regulator and the oxygen pulse regulator (1) is configured to trigger a delivery of a predetermined oxygen bolus/pulse in the tube, each bolus being defined by a volume of oxygen comprised between 20cm3 and 500cm3 (volume taken at a temperature comprised between 15°C and 30°C under a pressure between 0,1 and 1 atmosphere).

5. The system according to any of the claims 1 to 4, wherein the sensory device (7) is electrically operated and receives electrical power from light provided in the optical fiber (5).

6. The system according to any of the claims 1 to 5, wherein the tube assembly is such that the one or more optical fiber (5,51,52) is co-molded into the tube (3).

7. The system according to any of the claims 1 to 6, wherein the sensory device comprises:
a local energy storage (74),
a solid-state sensor (71),
a processing unit (72),
an optical coupler (76) to send back pressure signal.

8. The system according to any of the claims 1 to 7, wherein the optical fiber (5) is arranged inside the tube, against the inner wall of the tube. The optical may follow a helical path with a long pitch.

9. The system according to any of the claims 1 to 7, wherein there is provided two optical fibers (51,52) in the tube assembly.

10. The system according to any of the claims 1 to 9, wherein there is provided a hybrid connector (4) which comprises a tube connector (41) and an optical fiber connector (42).

11. The system according to any of the claims 1 to 10, wherein the optical fiber is surrounded by a protection sheath.

12. The system according to any of the claims 1 to 11, wherein the one or more parameter influenced by the breathing comprises a local pressure, and the sensory device (7) comprises a pressure sensitive element (75).

13. The system according to any of the claims 1 to 12, wherein the sensory device (7) comprises a movable membrane and a mirror (79) configured to be movable between an inhalation position and a exhalation position, wherein in one of the position, light arriving in the optical fiber is substantially reflected back in the optical fiber with a light reflection above a first threshold (TH1), and in the other position, light reflection back in the optical fiber is below a second threshold (TH2).

14. A method to dispense oxygen dispensing system for one or more passenger(s) of an aircraft, the system comprising
- an oxygen dispensing unit (1), with a dispensing valve (6) supplied by an oxygen source,
- a tube assembly (10) comprising a tube (3) and one or more optical fiber (5),
- a breathing mask (2), wherein the tube establishes a fluid connection between the oxygen dispensing unit and the mask,
- a sensory device (7) arranged at the breathing mask, connected to the oxygen dispensing unit via the one or more optical fiber (5),
the method comprising :
a- sensing, at the breathing mask, variations of one or more parameter influenced by the breathing of a passenger using the mask,
b- transmit, via the one or more optical fiber (5), one or more breath signal corresponding to the one or more parameter, to the oxygen dispensing unit (1),
c- controlling, upon said breath signal, at the oxygen dispensing unit (1), the dispensing valve (6) to deliver, a controlled quantity of oxygen in the tube.
